# EUROPEAN PATENT SPECIFICATION

(11) **EP 0 396 186 B1**
(45) Date of publication and mention of the grant of the patent: **03.11.1993**
(21) Application number: 90201063.6
(22) Date of filing: 27.04.1990
(51) Int. Cl.: H04N 7/087

(54) **Data distribution system for distributing data via information free zones in a television signal to be transmitted by a transmitter**
Datenrundfunksystem zum Verteilen von Daten in den informationsfreien Bereichen eines durch einen Sender übertragenen Fernsehsignals
Système de distribution de données via des zones libres d'information d'un signal de télévision à transmettre par un émetteur

(30) Priority: 03.05.1989 NL 8901133
(43) Date of publication of application: 07.11.1990
(73) Proprietor: Koninklijke PTT Nederland N.V., 2509 CH Den Haag (NL)
(72) Inventor: Van de Meent, Nico, NL-2343 MS Oegstgeest (NL)

(56) References cited:
- EP-A- 0 075 729
- US-A- 4 527 268
- SOFTWARE AND MICROSYSTEMS, vol. 1, no. 1, October 1981, pages 8-12, London, GB; F.K. HANNA et al.: "Teletext server for computer networks"
- NACHRICHTEN ELEKTRONIK UND TELEMATIK, vol. 2, October 1985, pages 26-30, Heidelberg, DE; B. LANGEN: "Elektronische Mitteilungssysteme über Bildschirmtext"
- RTM - RUNDFUNKTECHNISCHE MITTEILUNGEN, vol. 32, no. 2, March/April 1988, pages 57-64, Norderstedt, DE; K. HARDER et al.: "Die neue Fernsehtext-Zentralanlage ARD/ZDF-Videotext beim Sender Freies Berlin"
- RTM - RUNDFUNKTECHNISCHE MITTEILUNGEN, vol. 32, no. 2, March/April 1988, pages 65-71, Norderstedt, DE; G. HOFMANN et al.: ""WDR-Videotext" mit neuen Möglichkeiten"
- IEEE TRANSACTIONS ON CONSUMER ELECTRONICS, vol. CE-25, no. 3, July 1979, pages 327-333, IEEE, New York, US; B. MARTI et al.: "The antiope videotex system"
- 15TH INTERNATIONAL T.V. SYMPOSIUM, SYMPOSIUM RECORD, CATV SESSIONS, Montreux, 11th-17th June 1987, pages 334-340; K.C. QUINTON: "An overview of progress towards interactive services in the U.K."
- NACHRICHTEN ELEKTRONIK UND TELEMATIK, vol. 42, no. 10, October 1988, pages 404-408, Heidelberg, DE; J. PREUSS: "Alles unter einem Hut"
- IEEE NETWORK: THE MAGAZINE OF COMPUTER COMMUNICATIONS, vol. 1, no. 4, October1987, pages 4-10, IEEE, New York, US; A.J. HUFFMAN: "E-mail - the"glue" to office automation"
- COMMUTATION & TRANSMISSION, vol. 8, no. 1, 1986, pages 61-66, Paris, FR; M. DUCOURANT et al.: "Le service de messagerie X400 sur le système X83"
- NACHRICHTEN ELEKTRONIK UND TELEMATIK, vol. 2, August 1985, pages 47-51, Heidelberg, DE; G. LEUE: "GeoNet-Mailbox-Systeme"
- RUNDFUNKTECHNISCHE MITTEILUNGEN, vol. 28, no. 6, November/December 1984, pages 273-289, Norderstedt, DE; G. EITZ: "Kombinierer für Videotextsignale"

## Description

The invention relates to a data distribution system for distributing data via information free zones in a television signal - to be transmitted to more than one receiver by a terrestrial or an extraterrestrial transmitter - comprising an insertion device for inserting said data to be distributed into said information free zones of said television signal, collection means for the collection and control of data presented to these collection means by various data suppliers, and transmission means for the transmission of said collected data to said insertion device.

A data distribution system of said type is known from reference [1] mentioned under C., and in particular from page 86 of this publication. In this system data are distributed via a television transmitter, notably by means of the well-known broadcast-videotex ("teletext") method according to which data are inserted into the TV signal at those places in the signal where there is no picture information, to wit in the vertical blanking interval. This interval consists of six groups of two picture lines by which a data channel is formed with a maximum net speed of transmission of 72 kbits/s. The data signal to be transmitted via said data channel is fitted in into the TV signal - originating from a TV broadcast system - by said insertion device, after which the TV signal together with the data signal is transmitted via a TV transmitter.

The data signal is (generally) formed by several data signals, originating from various data suppliers. In the known system these data suppliers present their signal to a transmission device, usually by means of modems via hired lines. The data signals coming from various data suppliers can also be combined before sending them via a hired line to the transmission device. If desired, the data signals will be presented to the transmission device via "conditional access equipment".

A drawback of the known system is that it needs special, appropriate provisions for the collection and control of data signals presented by various data suppliers.

An additional drawback of the known system is that a certain part of the total transmission capacity is reserved by the various data suppliers, due to which a predetermined part of this (limited) transmission capacity is claimed. Consequently, in the event that a data supplier does not present any data, the part reserved for it will not be utilised.

The object of the present invention is to obviate said drawbacks and for this purpose the collection means are formed by a public electronic mail system, comprising a plurality of electronic mailboxes, accessible to users, for introducing, reading out or mutating messages, each of the data suppliers introducing its data to be distributed as a message into at least one certain mailbox, and the transmission means are formed by a transmission device, which, on the one hand, keeps up, as a user of said electronic mail system, a periodic or a permanent connection with that certain mailbox of the electronic mail system, the messages in that mailbox being read out, and which, on the other hand, is connected to the insertion device, said read-out contents of the mailbox being transmitted to said insertion device at those moments when there is transmission capacity available in the insertion device.

The invention is based on the understanding that an electronic mail system can very well be used as a means for the collection and control of data signals originating from various suppliers. In addition to this, it appears that the utilisation of an already existing public facility is considerably more attractive from a business point of view (particularly economically and organisationally) than any special provisions that have to be made for this purpose. Moreover, a higher degree of utilisation of the data channel will be achieved with said transmission device than with the transmission means in the known system, for the transmission device only transmits the messages which have been deposited by the various data suppliers into the appropriate mailbox, to the insertion device at those moments when there is transmission capacity available in the insertion device, due to which the data in the data channel can be closely packed.

Combinations of a data distribution system of the interactive type ("interactive videotex") with a mailbox system are well-known in the art, see for example references [2] and [3] mentioned under C. However, in those cases the data distribution system is connected to a mail box system primarily as a supplier of data. The claimed invention differs from the state of the art in that the data distribution system is of the broadcast type and receives data from the mail box system rather than supplying data to it. In this case, the mail box system is used for quite another purpose than in the state of the art. It serves as buffer space for data provided by various suppliers, which data can be presented to the data distribution system at appropriate moments so as to make efficient use of the available transmission capacity, with no gaps left for data suppliers not supplying data at particular moments. This is not a point for consideration in the case of interactive videotex. The system according to the invention also obviates the need for special provisions for the collection and control of data provided by various suppliers.

### References

- [1]: Chambers, J.P.
BBC Datacast
EBU Rev. Tech. (Belgium), no. 222, pp. 80-9, April 1987.
- [2]: Langen, B.
Elektronische Mitteilungssysteme über Bildschirmtext
Nachrichten Elektronik und Telematik, Special 2, pp. 26-30, October 1985.
- [3]: Preuss, J.
Alles unter einem Hut
Nachrichten Elektronik und Telematik, vol. 42, pp. 404-408, October 1988

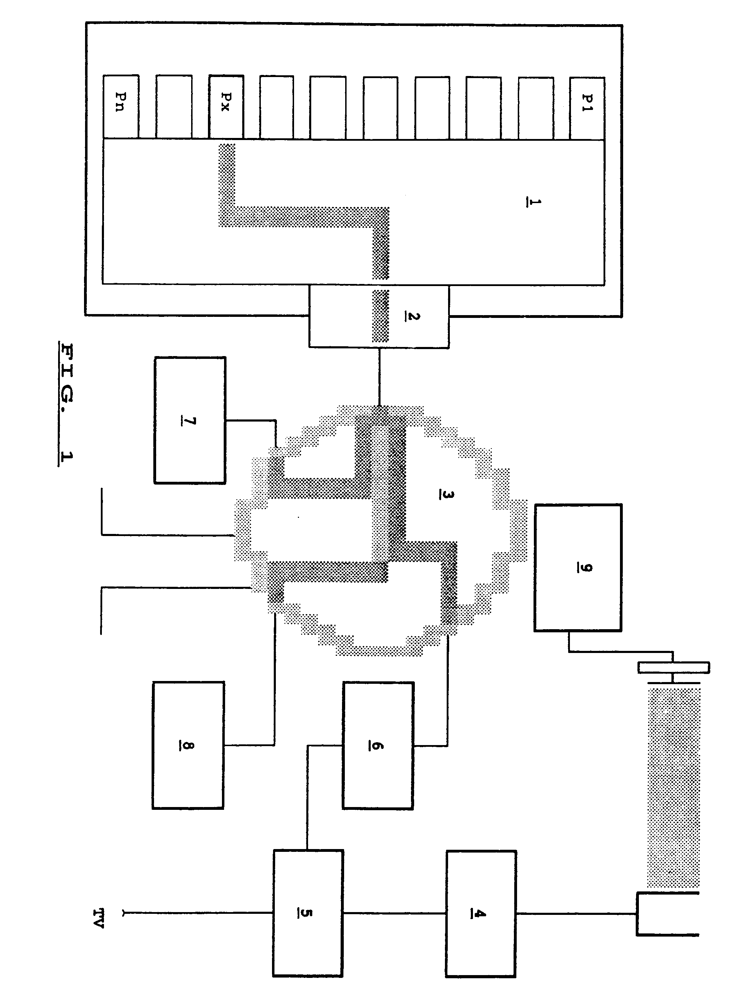

Figure 1 shows an embodiment of a data distribution system according to the invention, substantially formed by a (public) electronic mail system 1, a (public) telecommunication network 3 and a TV transmitter 4. This figure moreover shows a data insertion device 5 and a data transmission device 6, and besides a first data supplier 7, a second data supplier 8 and one of the many TV receivers 9.

If the first data supplier 7 wants to have a message transmitted to the receivers 9, this supplier will try to establish a connection with the electronic mail system 1 via the telecommunication network (for example a telephone network or a data network). In this mail system 1 it is - in an access monitoring device 2 - inter alia investigated if the supplier 7 is entitled to gain access to this system. If this is the case, the data supplier 7 will request to be admitted to one certain mailbox Px in the many electronic mailboxes P1...Pn of the system. The mail system investigates if the data supplier 7 is entitled to gain access to mailbox Px and to deposit a message there. After this has been found correct, the data supplier 7 deposits its message into the mailbox and then breaks the connection again. If a second data supplier 8 wants to distribute a message via the data distribution system, it will make contact with the mail system 1 in the same way as described hereinbefore and it will deposit its message there also into the mailbox Px.

The messages deposited into the mailbox Px have to be transmitted via the TV transmitter 4, which is primarily intended for transmitting TV picture and sound signals, hereinafter indicated as a TV signal and depicted in the figure by "TV", to the TV receivers. The data to be transmitted together with the TV signal are inserted, in the insertion device 5, into that TV signal, id est inserted into the information free zones of that TV signal, in conformity with CCIR Teletext standard B. It is noted that the information free zones can be information free "by nature", id est free from analogue or digital information, or zones which have been made free from information, to wit by temporarily suppressing the relevant information in some way or other, especially for the present purpose.

The connection between the mailbox Px in the mailbox system 1 is established by the transmission device 6, which device - for example a small computer system with communication facilities - periodically dials, via the telecommunication network 3, the mail system 1 and - after having been checked by the mail system 1 - reads out the contents of mailbox Px and - after a validity check has been carried out and the result of it is positive - stores it in its own memory ("downloading"); subsequently the transmission device 6 erases the contents of mailbox Px. Next the data thus stored in the memory of the transmission device 6 are transmitted on to the insertion device 5. As indicated in figure 1, these data are transmitted on to the insertion device 5 via a direct connection; if desired, however, this can also take place via the public telecommunication network.

The data inserted into the TV signal by the insertion device 5 are transmitted by the transmitter 4 and received by the receivers 9. These receivers, which are adapted to withdraw from the received signal the data inserted at the transmitting end, are thus able to reproduce the data deposited into the mail system 1 by the data suppliers 7 and 8 and/or to process these data further (or to have them processed further).

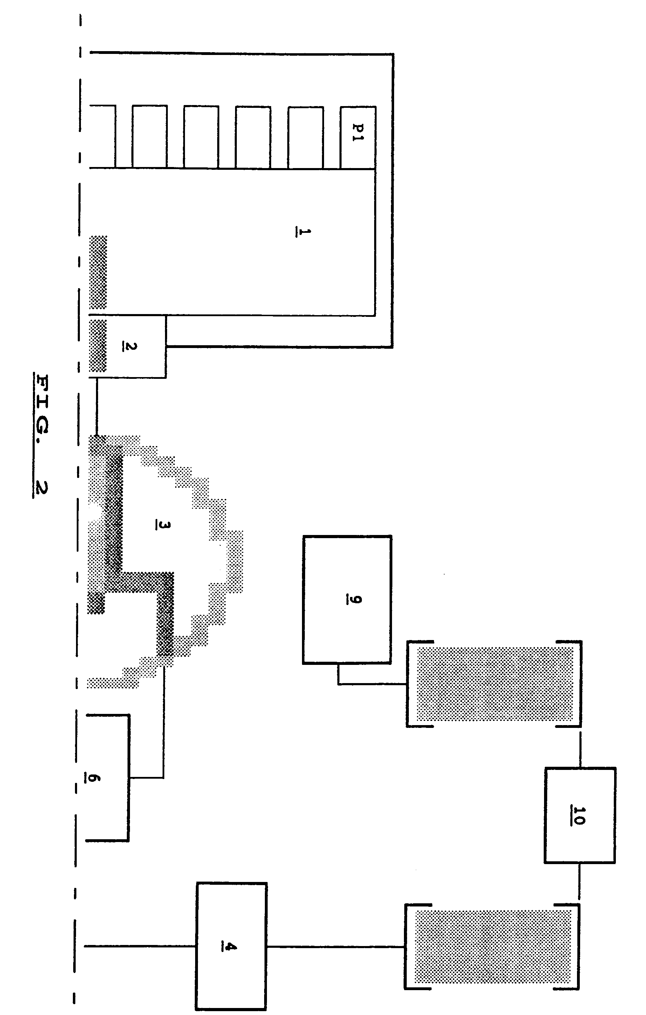

Figure 2 corresponds with figure 1, except that the TV signal (together with inserted data, if any,) is distributed to the receivers 9 via an extraterrestrial transmitter 10 (an artificial earth satellite), which receives and retransmits the TV signal transmitted by the transmitter 4, which serves as a ground station; consequently, the real distribution function of the transmitter 4 is in fact taken over by said extraterrestrial transmitter 10.

## Claims

1. A data distribution system for distributing data via information free zones in a television signal - to be transmitted to more than one receiver by a terrestrial or an extraterrestrial transmitter - comprising
an insertion device for inserting said data to be distributed in said information free zones of said television signal,
collection means for the collection and control of data presented to these collection means by various data suppliers, and
transmission means for the transmission of said collected data to said insertion device,
characterised
in that said collection means are formed by a public electronic mail system (1), comprising a plurality of electronic mailboxes (P1...Pn), accessible to users, for introducing, reading out or mutating messages, each of said data suppliers (7,8) introducing its data to be distributed as a message into at least one certain mailbox (Px), and
in that said transmission means are formed by a transmission device (6), which, on the one hand, keeps up, as a user of said electronic mail system, a periodic or a permanent connection with that certain mailbox (Px) of the electronic mail system, the messages in that mailbox being read out, and which, on the other hand, is connected to said insertion device (5), said read-out contents of the mailbox being transmitted to said insertion device at those moments when there is transmission capacity available in the insertion device.

## Patentansprüche

1. Datenrundfunksystem zum Verteilen von Daten in den informationsfreien Bereichen eines durch einen Sender übertragenen Fernsehsignals - zur Ubertragung an einen oder mehrere Empfänger mittels eines terrestrischen oder außerterrestrischen Senders - mit einer Einfügungsvorrichtung zur Einfügung dieser zu verteilenden Daten in die genannten informationsfreien Bereiche des genannten Fernsehsignals, mit Erfassungsvorrichtungen zur Erfassung und Steuerung von Daten, die diesen Erfassungsvorrichtungen von verschiedenen Datenanbietern zur Verfügung gestellt werden, und mit Ubertragungsvorrichtungen zur Übertragung der erfaßten Daten an die Einfügungsvorrichtung,
dadurch gekennzeichnet, daß die Erfassungsvorrichtungen von einem öffentlichen Postfachsystem gebildet sind mit einer Vielzahl von elektronischen Postfächern (1) (mail boxes) (Pl...Pn), die für Benutzer zugänglich sind, um Mitteilungen einzugeben, abzurufen oder abzuändern. wobei jeder der Datenanbieter (7,8) seine zu verteilenden Daten als Mitteilung in zumindest ein bestimmtes Postfach (mail box) (Px) eingibt, und daß die Übertragungsvorrichtungen von einer Übertragungseinheit (6) gebildet sind, die einerseits als Nutzer des elektronischen Postsystems in festgelegten Zeitabständen oder kontinuierlich eine Verbinduna mit diesem bestimmten Postfach (Px) des elektronischen Postsystems unterhält, wobei die Mitteilungen in diesem Postfach abgerufen werden, und die andererseits mit der Einfügungsvorrichtung verbunden ist, wobei der genannte Inhalt des Postfachs zu denjenigen Zeitpunkten an die genannte Einfügungsvorrichtung (5) übertragen wird, an denen Übertragungskapazität in der Einfügungsvorrichtung verfügbar ist.

## Revendications

1. Système de distribution de données pour distribuer des données via des zones exemptes d'information d'un signal de télévision qui doit être transmis à plus d'un récepteur par un émetteur terrestre ou extra terrestre, comprenant :
un dispositif d'insertion pour insérer lesdites données qui doivent être distribuées dans lesdites zones exemptes d'information dudit signal de télévision ;
un moyen de collecte pour la collecte et la commande des données présentées à ce moyen de collecte au moyen de divers dispositifs d'alimentation en données ; et
un moyen de transmission pour la transmission desdites données collectées jusqu'audit dispositif d'insertion,
caractérisé en ce que :
ledit moyen de collecte est formé par un système de messagerie électronique (1), comprenant une pluralité de boîtes aux lettres électroniques (Pl, ..., Pn), accessible à des utilisateurs, pour introduire, lire ou faire muter des messages, chacun desdits dispositifs d'alimentation en données (7, 8) introduisant ses données qui doivent être distribuées en tant que message dans au moins une certaine boîte aux lettres (Px) ; et
ledit moyen de transmission est formé par un dispositif de transmission (6) qui d'une part maintient, en tant qu'utilisateur dudit système de messagerie électronique, une connexion périodique ou permanente avec cette certaine boîte aux lettres (Px) du système de messagerie électronique, les messages de cette boîte aux lettres étant lus, et qui d'autre part est connecté audit dispositif d'insertion (5), ledit contenu de lecture de la boîte aux lettres étant transmis audit dispositif d'insertion aux moments auxquels il y a une capacité de transmission disponible dans le dispositif d'insertion.
